# EUROPÄISCHE PATENTSCHRIFT

(11) **EP 0 863 449 B1**
(45) Veröffentlichungstag und Bekanntmachung des Hinweises auf die Patenterteilung: **10.05.2000**
(21) Anmeldenummer: 98103071.1
(22) Anmeldetag: 21.02.1998
(51) Int. Cl.: G05B 1/01

(54) **Vorrichtung zur Ausgabe eines Referenzwertes vor und eines Istwertes nach Bestätigung eines Bedienelementes**
Device for supplying a reference value before and an actual value after manipulating a control device
Dispositif pour fournir une valeur de reference avant et une valeur de consigne après avoir agit sur un dispositif d'actonnement

(30) Priorität: 04.03.1997 DE 19708718
(43) Veröffentlichungstag der Anmeldung: 09.09.1998
(73) Patentinhaber: ROBERT BOSCH GMBH, 70442 Stuttgart (DE)
(72) Erfinder: Koenig, Markus, 73033 Goeppingen (DE); Krieger, Klaus, 73249 Wernau (DE); Rehfuss, Herbert, 73760 Ostfildern (DE)

(56) Entgegenhaltungen:
- US-A- 4 500 967

## Beschreibung

### Stand der Technik

Die Erfindung geht aus von einer Vorrichtung zur Signalvorgabe nach der Gattung des unabhhängigen Anspruchs. Als Potentiometer ausgeführte Bedienelemente geben einer elektronischen Steuerung einen Sollwert vor. Für bestimmte Prüfroutinen müssen die Bedienelemente in eine bestimmte Position gebracht werden. Durch aufwendige mechanische Einstellvorgänge werden Potentiometer hierfür abgeglichen.

Der Erfindung liegt die Aufgabe zugrunde, Einstellvorgänge der Bedienelemente zu erleichtern. Die Aufgabe wird durch die im unabhängigen Anspruch angegebenen Merkmale gelöst.

### Vorteile der Erfindung

Die erfindungsgemäße Vorrichtung zur Signalvorgabe weist ein manuell betätigbares Bedienelement auf, das in Abhängigkeit von seiner jeweiligen Stellung einen Istwert und in einer Referenzstellung einen Referenzwert abgibt. Der Referenzwert ist in einem ersten Speicher hinterlegt. Ein Vergleicher ist vorgesehen, der den Istwert mit dem Referenzwert vergleicht und eine Halteschaltung steuert, die in einem dritten Speicher ein erstmaliges Abweichen des Istwerts vom Referenzwert als Ausgangssignal hinterlegt. In einem zweiten Speicher ist ein Anfangswert abgespeichert. Eine Auswahlschaltung wählt als Signal, das einer Steuerelektronik zugeführt ist, den Anfangswert aus, wenn das Ausgangssignal noch kein erstmaliges Abweichen des Istwerts vom Referenzwert anzeigt. Das Bedienelement muß sich lediglich in einer Referenzstellung befinden, so daß ein Anfangswert der Steuerelektronik quasi als Istwert des Bedienelements zugeführt ist. Der gewünschte Anfangswert muß nicht mehr durch einen sorgfältigen Abgleich des Bedienelements generiert werden. Es ist nur noch erforderlich, das Bedienelement in seine Referenzstellung zu bewegen, unabhängig vom sich einstellenden Istwert. Die Bedienelemente können bereits zu Beginn des Fertigungsablaufs in ihre Referenzstellung gebracht werden, ohne später weitere manuelle Einstellvorgänge durchführen zu müssen. Die erfindungsgemäße Vorrichtung unterstützt eine fortschreitende Fertigungsautomatisierung.

In einer zweckmäßigen Weiterbildung ist vorgesehen, daß nach einem erstmaligen Abweichen des Istwerts vom Referenzwert der Istwert als Signal verwendet ist. Die Aktivierung der Bedienelemente für den Normalberieb erfolgt über eine erstmalige Betätigung des entsprechenden Bedienelements. Der mit einer Vorgabe des Anfangswerts korrespondierende Betriebszustand läßt sich ohne zusätzliche Bedienelemente beenden. Der vom Bediener gewünschte Betriebsartenwechsel vollzieht sich automatisch.

Eine vorteilhafte Ausgestaltung sieht vor, daß als Referenzstellung eine beliebige Stellung des Bedienelements verwendet, und der sich einstellende Istwert als Referenzwert in dem zweiten Speicher abgelegt ist. Die Bedienelemente müssen nun nicht mehr in eine vorher festgelegte Referenzstellung gebracht werden. Ein diesbezüglicher Arbeitsgang entfällt. Die Stellung, in der sich das Bedienelement gerade befindet, definiert die Referenzstellung.

Weitere zweckmäßige Weiterbildungen aus weiteren abhängigen Ansprüchen ergeben sich aus der Beschreibung.

### Zeichnung

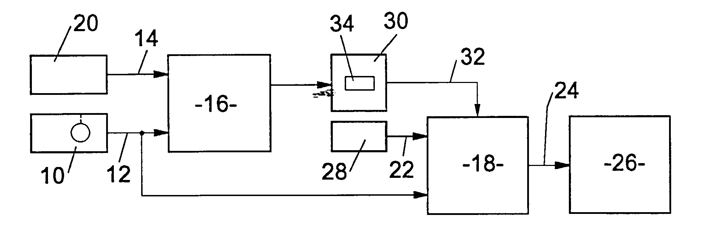

Es zeigt die Figur ein mögliches Ausführungsbeispiel der erfindungsgemäßen Vorrichtung.

Ein in einem ersten Speicher 20 hinterlegter Referenzwert 14 bildet eine Eingangsgröße für einen Vergleicher 16. Diesem ist ein Istwert 12 eines Bedienelements 10 zugeführt. Eine Halteschaltung 30 wertet ein Vergleicherausgangssignal aus und stellt ihrerseits ein Ausgangssignal 32 einer Auswahlschaltung 18 bereit. Der Auswahlschaltung 18 sind ein in einem zweiten Speicher 28 hinterlegter Anfangswert 22 und der Istwert 12 zugeführt. Die Auswahlschaltung 18 gibt ein Signal 24 an eine Steuerelektronik 26 ab.

Bedienelemente 10 lassen sich analog oder diskret verstellen. In Abhängigkeit von der jeweiligen Stellung gibt das Bedienelement 10 einen Istwert 12 ab. Bei einem als Potentiometer ausgeführten Bedienelement 10 könnte dies eine Spannung sein. In einer Referenzstellung des Bedienelements 10 stellt sich ein Istwert 12 ein, der erfaßt und als Referenzwert 14 in dem ersten Speicher abgelegt wird. Als Referenzstellung dient beispielsweise der Endanschlag des Bedienelements 10, grundsätzlich jedoch eignet sich hierfür jede beliebige Stellung. Beispielsweise während des Fertigungsprozesses verharrt das Bedienelement 10 in der Referenzstellung. Der Vergleicher 16 vergleicht Referenzwert 14 und Istwert 12. Während des Fertigungsprozesses stimmen diese überein. Die entsprechende Information wird der Halteschaltung 30 mitgeteilt. Bei Übereinstimmung von Istwert 12 und Referenzwert 14 nimmt das vorzugsweise binär ausgeführte Ausgangssignal 32 beispielsweise den Zustand logisch Null ein. Bei diesem Zustand gibt die Auswahlschaltung 18 den Anfangswert 22 an die Steuerelektronik 26 weiter. Der Anfangswert 22 ist in dem zweiten Speicher 28 fest hinterlegt und korrespondiert im gewählten Beispiel mit dem gewünschten Betriebszustand während der Fertigung. Solange das Bedienelement 10 keine Betätigung erfährt, dient der Anfangswert 22 der Steuerelektronik 26 als Eingangssignal 24.

Soll ein auf das Bedienelement 10 zurückgreifendes Gerät nach der Fertigung in Betrieb genommen werden, muß der Benutzer, der Monteur oder Endverbraucher, das Bedienelement 10 bewegen. Weicht hierauf der so veränderte Istwert 12 um einen bestimmten Wert vom Referenzwert 14 ab, erkennt dies der Vergleicher 16. Aus Gründen der praktischen Realisierbarkeit korrespondiert der Referenzwert 14 mit einem entsprechenden Wertebereich. Das Verlassen dieses Wertebereichs wertet die Halteschaltung 30 aus. Weichen Istwert 12 und Referenzwert 14 zum ersten Mal voneinander ab, ändert die Halteschaltung 30 den Zustand des Ausgangssignals 32. Im Beispiel erfolgt der Signalwechsel von logisch Null auf logisch Eins. Diese Funktion läßt sich technisch beispielsweise durch ein Flip-Flop realisieren. Beim Zustand logisch Eins des Ausgangssignals 32 stellt die Auswahlschaltung 18 den aktuellen Istwert 12 des Bedienelements 10 der Steuerelektronik 26 als Signal 24 zur Verfügung. Das Signal 24 steuert die Steuerelektronik 26 beispielsweise im Sinne einer Sollwertvorgabe.

Erreicht der Istwert 12 hierauf den im ersten Speicher 20 hinterlegten Referenzwert 14, führt dies nicht zu einem erneuten Wechsel des Ausgangssignals 32. Auch in diesem Fall bleibt als Signal 24 der Istwert 12 aktiv.

Der Anfangswert 22 läßt sich alternativ durch eine vorgegebene Bedienfolge des Bedienelements 10 aktivieren. Hierzu ist beispielsweise das Bedienelement 10 innerhalb eines kurzen Zeitraums mehrmals in die Referenzstellung zu bringen.

Die beschriebenen Schaltungsteile können durch entsprechende Software auf einem Computer oder Mikroprozessor realisiert werden. Die Speicher 20, 28, 34 können Teil der Steuerelektronik 26 sein. Während des Fertigungsablaufs lassen sich Zeitpunkt der Speicherung des Referenzwerts 14 oder die Übernahme eines bestimmten Anfangswerts 22 rechnergestützt vornehmen. Dieser Rechner kommuniziert beispielsweise mit der Steuerelektronik 26, die die Speicher 20, 28 entsprechend beschreibt.

Die Vorrichtung findet bevorzugte Verwendung für Bedienelemente 10 bei Heizungsreglern für die Vorgabe der Heizleistung oder Lüfterschaltsprünge. Sie ist jedoch hierauf nicht eingeschränkt.

## Patentansprüche

1. Vorrichtung zur Signalvorgabe, mit zumindest einem manuell betätigbaren Bedienelement (10), das in Abhängigkeit von seiner jeweiligen Stellung einen Istwert (12) und in einer Referenzstellung einen Referenzwert (14) abgibt, wobei der Referenzwert (14) in einem ersten Speicher (20) hinterlegt ist, mit einem Vergleicher (16), der den Istwert (12) mit dem Referenzwert (14) vergleicht, mit einem zweiten Speicher (28), in dem ein Anfangswert (22) hinterlegt ist, mit einer vom Vergleicher (16) gesteuerten Halteschaltung (30), die in einem dritten Speicher (34) ein erstmaliges Abweichen des Istwerts (12) vom Referenzwert (14) als Ausgangssignal (32) hinterlegt, und mit einer Auswahlschaltung (18), die als Signal (24), das einer Steuerelektronik (26) zugeführt ist, den Anfangswert (22) auswählt, wenn das Ausgangssignal (32) noch kein erstmaliges Abweichen des Istwerts (12) vom Referenzwert (14) anzeigt.

2. Vorrichtung nach Anspruch 1, dadurch gekennzeichnet, daß nach einem erstmaligen Abweichen des Istwerts (12) vom Referenzwert (14) der Istwert (12) als Signal (24) verwendet ist.

3. Vorrichtung nach einem der vorhergehenden Ansprüche, dadurch gekennzeichnet, daß als Referenzstellung eine beliebige Stellung des Bedienelements (10) verwendet ist, und der sich einstellende Istwert (12) als Referenzwert (14) in dem zweiten Speicher (20) abgelegt ist.

4. Vorrichtung nach einem der vorhergehenden Ansprüche, dadurch gekennzeichnet, daß die Referenzstellung im Produktionsprozeß einer das Bedienelement (10) enthaltenden Baugruppe eingestellt ist.

5. Vorrichtung nach einem der vorhergehenden Ansprüche, dadurch gekennzeichnet, daß der Anfangswert (22) für einen Testbetrieb der Steuerelektronik (26) benötigt ist.

6. Vorrichtung nach einem der vorhergehenden Ansprüche, dadurch gekennzeichnet, daß als Bedienelement (10) ein Potentiometer verwendet ist.

7. Vorrichtung nach Anspruch 6, dadurch gekennzeichnet, daß als Referenzstellung eine Anschlagstellung des Potentiometers verwendet ist.

## Claims

1. Apparatus for signal specification, having at least one manually actuable operating element (10), which, depending on its respective position, outputs an actual value (12) and outputs a reference value (14) in a reference position, the reference value (14) being stored in a first store (20), having a comparitor (16), which compares the actual value (12) with the reference value (14), having a second store (28), in which an initial value (22) is stored, having a holding circuit (30), which is controlled by the comparitor (16) and stores a first deviation of the actual value (12) from the reference value (14) as output signal (32) in a third store (34), and having a selection circuit (18), which selects the initial value (22) as a signal (24) which is fed to an electronic control unit (26), if the output signal (32) still does not indicate a first deviation of the actual value (12) from the reference value (14).

2. Apparatus according to Claim 1, characterized in that after a first deviation of the actual value (12) from the reference value (14), the actual value (12) is used as signal (24).

3. Apparatus according to one of the preceding claims, characterized in that any desired position of the operating element (10) is used as the reference position, and the actual value (12) that is established is stored as reference value (14) in the second store (20).

4. Apparatus according to one of the preceding claims, characterized in that the reference position is set in the production process of an assembly containing the operating element (10).

5. Apparatus according to one of the preceding claims, characterized in that the initial value (22) is required for a test mode of the electronic control unit (26).

6. Apparatus according to one of the preceding claims, characterized in that a potentiometer is used as the operating element (10).

7. Apparatus according to Claim 6, characterized in that a stop position of the potentiometer is used as the reference position.

## Revendications

1. Dispositif servant à prédéfinir un signal,
caractérisé en ce qu'il comprend
• au moins un élément de réglage (10) qui peut être actionné de façon manuelle, et qui délivre en fonction de sa position respective une valeur réelle (12) et dans sa position de référence une valeur de référence (14), la valeur de référence (14) étant déposée dans une première mémoire (20), et
• en outre un comparateur (16) qui compare la valeur réelle (12) à la valeur de référence (14), une deuxième mémoire (28), dans laquelle est déposée une valeur initiale (22), un circuit de maintien (30) qui est commandé par le comparateur (16), circuit de maintien qui dépose dans une troisième mémoire (34) l'écart qui se produit pour la première fois entre la valeur réelle (12) et la valeur de référence (14) en tant que signal de sortie (32), et un circuit de sélection (18) qui sélectionne la valeur initiale (22), sous la forme du signal,(24) qui est amené à un circuit électronique de commande (26), quand le signal de sortie (32) n'indique pas encore d'écart se produisant pour la première fois entre la valeur réelle (12) et la valeur de référence (14).

2. Dispositif selon la revendication 1,
caractérisé en ce qu'
on utilise comme signal (24) la valeur réelle (12) après un écart pour la première fois entre la valeur réelle (12) et la valeur de référence (14).

3. Dispositif selon l'une des revendications précédentes,
caractérisé en ce qu'
• on utilise comme position de référence n'importe quelle position de l'élément de réglage (10) et
• on dépose dans la deuxième mémoire (20) la valeur réelle (12) qui s'établit comme valeur de référence (14).

4. Dispositif selon l'une des revendications précédentes ,
caractérisé en ce qu'
on établit la position de référence dans le processus de production d'un sous-ensemble contenant l'élément de réglage (10).

5. Dispositif selon l'une des revendications précédentes,
caractérisé en ce qu'
on utilise la valeur initiale (22) pour effectuer un test du circuit électronique de commande (26).

6. Dispositif selon l'une des revendications précédentes,
caractérisé en ce qu'
on utilise comme élément de réglage (10) un potentiomètre.

7. Dispositif selon la revendication 6,
caractérisé en ce qu'
on utilise comme position de référence une position de butée du potentiomètre.
